Europäisches Patentamt

European Patent Office

Office européen des brevets

(19)

(11) EP 0 834 941 A1

(12) **EUROPEAN PATENT APPLICATION**

(43) Date of publication:
08.04.1998 Bulletin 1998/15

(51) Int Cl.$^6$: **H01M 2/16**

(21) Application number: 97307565.8

(22) Date of filing: 26.09.1997

(84) Designated Contracting States:
**AT BE CH DE DK ES FI FR GB GR IE IT LI LU MC NL PT SE**

(30) Priority: **26.09.1996 JP 254330/96**

(71) Applicant: **TORAY INDUSTRIES, INC.**
**Tokyo 103 (JP)**

(72) Inventors:
- **Matsuda, Yoshio**
  **Koka-gun, Shiga-ken, 520-32 (JP)**
- **Nakae, Takeji**
  **Otsu-shi, Shiga-ken, 520-21 (JP)**
- **Adachi, Shinya**
  **Otsu-shi, Shiga-ken, 520 (JP)**

- **Takanishi, Keijiro**
  **Kurita-gun, Shiga-ken, 520-30 (JP)**
- **Inoue, Takeharu**
  **Yamashina-ku, Kyoto-shi, Kyoto-fu, 607 (JP)**
- **Tsukamoto, Jun**
  **Otsu-shi, Shiga-ken, 520 (JP)**
- **Shimoyama, Naoki**
  **Otsu-shi, Shiga-ken, 520 (JP)**
- **Iwasaki, Naoki**
  **Otsu-shi, Shiga-ken, 520 (JP)**

(74) Representative: **Coleiro, Raymond et al**
**MEWBURN ELLIS**
**York House**
**23 Kingsway**
**London WC2B 6HP (GB)**

(54) **An electrode for a battery and a battery containing it**

(57) An electrode for at least one of the anode and cathode or a battery comprises an electrode member and a microporous membrane disposed on and integral with the electrode member. The microporous membrane may be composed mainly of a thermoplastic and/or thermosetting resin, in particular a fluorine-containing polymer and/or a sulfur-containing polymer (e.g alpha type polyvinylidene fluoride).

*Fig. 4*

EP 0 834 941 A1

## Description

The present invention relates to an electrode for a battery and a battery containing it, particularly a battery high in capacity and excellent in safety.

In recent years, portable apparatuses such as video cameras and notebook type personal computers have been increasingly used, and in this connection, small-sized high capacity secondary batteries are in high demand. Most of the conventionally used secondary batteries are nickel-cadmium batteries and nickel-hydrogen batteries using any alkaline electrolyte, but they are as low as about 1.2 V in cell voltage and insufficient in energy density. So, a lithium secondary battery using lithium metal as the anode (negative pole) was developed, but because of a safety problem due to the generation of lithium dendrite, it was not popularly used. Thereafter, a lithium ion secondary battery using a carbon interlayer compound said to be small in dendrite generation as the anode was developed, and is now suddenly very popularly used as a secondary battery for portable apparatuses.

However, although the lithium ion secondary battery is very safe as compared with the lithium metal secondary battery, the technique is not yet perfectly safe, and especially with a battery higher in cell capacity, ensuring safety still remains a problem.

In the conventional batteries, a microporous membrane of, for example, polyethylene or polypropylene, is installed as a separator film between the cathode and the anode. It functions as an insulating layer between the electrodes, and also can shut down the current flowing in the battery should any abnormal condition prevail, by closing the micropores by generated heat. The microporous membrane is said to be indispensable for improving the safety of a battery. Especially polyethylene low in melting point is effective for improving safety, and is now generally used most. However, the lithium ion secondary battery is not yet safe enough, and cases in which smoke and fire have resulted have been reported.

We conducted intensive investigations in an attempt to further improve the safety of such a battery, and as a result, found that the safety can be improved by properly selecting, for example, the strength, elastic modulus and pore size of the microporous membrane directly formed on an electrode. The conventionally used separators are required to be high in strength and elastic modulus when, as is usual, rolling of the electrode is desired and usually films of about 200 MPa in strength and about 2 GPa in elastic modulus are used. However, as described above, even these separators do not yet ensure safety.

On the other hand, for high polymer solid electrolytes said to inhibit the generation of lithium dendrite for ensuring higher safety, a solvent such as an electrolyte solvent is added to enhance the ionic conductivity, for using the electrolytes as gelled high polymers. However, these solid electrolytes are as low as less than $10^{-4} \sim 10^{-5}$ Pa in elastic modulus, and since they are not sufficiently able to keep the electrodes apart from each other, a separator which is otherwise unnecessary is often placed between the electrodes.

The conventionally applied means for ensuring safety (especially to pass deformation tests such as nail penetration and crush tests) include (1) the use of specially developed electrode material or electrolyte and (2) the use of specially developed battery constitution or safety device (see, for example, JP-A-05-326016, JP-A-06-203827, JP-A-06-215749, JP-A-06-325751 and JP-A-06-333548). As measure (1), the use of $LiMn_2O_4$ relatively high in thermal stability as an active cathode material, the use of a flame retardant electrolyte and the use of a separator with a shut-down characteristic, for example, have been attempted. As measure (2), the use of a pressure burst plate, a PTC element and a current shut-down valve, for example, have been attempted.

However, with these means alone, it has been difficult to ensure the safety of a battery excellent in high energy density and high capacity characteristics. Especially when an $LiNiO_2$ based cathode material expected to ensure a high capacity but regarded as insufficient in safety is used, it has been practically impossible to ensure the safety.

As a measure classified above as (2), a battery with a rolled electrode has been proposed, in which an exposed metal portion equal in potential to the cathode and an exposed metal portion equal in potential to the anode face each other along a length of more than one turn of the rolled electrode at a radially outermost portion and/or a radially innermost portion of the rolled electrode (see JP-A-08-153542). However, no indication of safety improvement, such as a higher cell capacity, is mentioned.

We previously conducted studies in an attempt to solve the above problem, and as a result found that a battery having a microporous membrane-covered electrode produced by wet solidification is excellent in high energy density and high capacity and yet highly safe (JP-A-08-254330). We conducted further intensive studies and also found that the safety can be more reliably ensured by using the microporous membrane-covered electrode and a rolled electrode in which a conductor equal in potential to the cathode and a conductor equal in potential to the anode face each other along a length of more than one turn of the rolled electrode at a radially outermost portion and/or a radially innermost portion of the rolled electrode.

Surprisingly, we have found that a solution to the above problem can be provided by various aspects and embodiments of the invention, including

(1) an electrode for a battery, which electrode comprises an electrode member and an electrically insulating microporous membrane disposed on and integral with the electrode member;

(2) an electrode, as in (1) above, wherein the microporous membrane is at least mainly composed of a thermoplastic resin (i.e. the membrane contains no component present to a greater % by weight than that of the thermoplastic resin);

(3) an electrode, as in (1) or (2) above, wherein the microporous membrane is a wet coagulated coated membrane;

(4) an electrode, as in any one of (1) to (3) above, wherein the microporous membrane is 0.1 - 10 MPa in strength and 10 - 200 MPa in elastic modulus ;

(5) an electrode, as in any one of (1) to (4) above, wherein the microporous membrane has pores of a median size of 100 - 1500 nm;

(6) an electrode, as in any one of (1) to (5) above, wherein the microporous membrane has a porosity of 40 to 90 %;

(7) an electrode, as in any one of (2) to (6) above, wherein the thermoplastic resin contains 40 wt% or more of a type polyvinylidene fluoride (PVDF);

(8) a battery having at least one electrode as in any one of (1) to (7) above;

(9) a battery, as in (8) above, wherein a conductor equal in potential to the cathode and a conductor equal in potential to the anode are rolled and laminated to face each other and spaced from each other by a separator along a length of at least one, and preferably more than one, turn.

Preferred embodiments of the invention will now be described in more detail, with reference to the accompanying drawings, in which:

Fig. 1 is a schematic vertical sectional view showing an example of a secondary battery embodying the present invention.

Fig. 2 is a schematic vertical sectional view showing the secondary battery embodying the present invention described in Example 1.

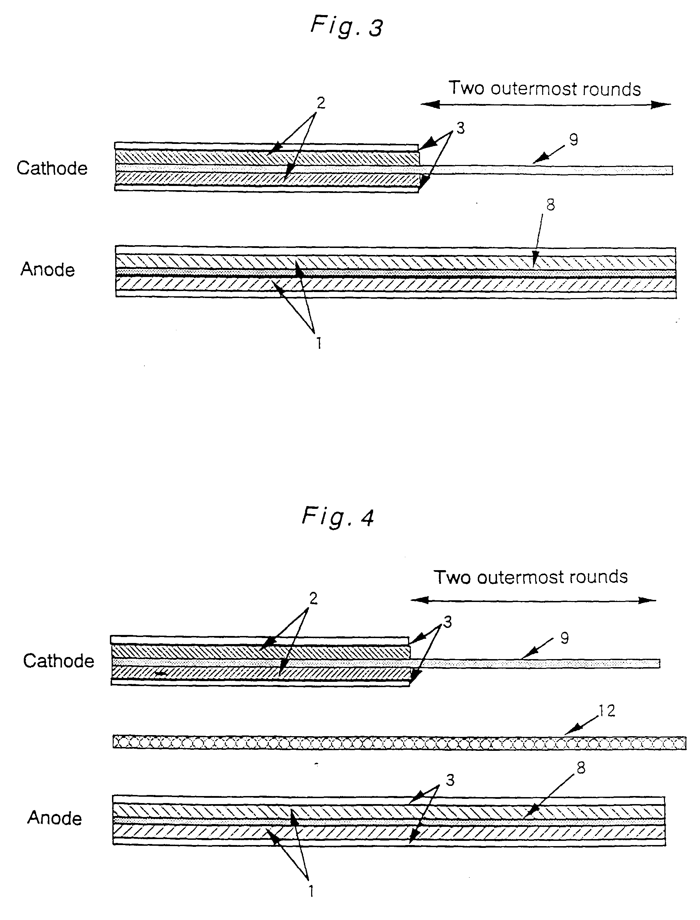

Fig. 3 is a schematic drawing showing the outermost portion of the secondary battery embodying the present invention described in Example 18.

Fig. 4 is a schematic drawing showing the outermost portion of the secondary battery embodying the present invention described in Example 19.

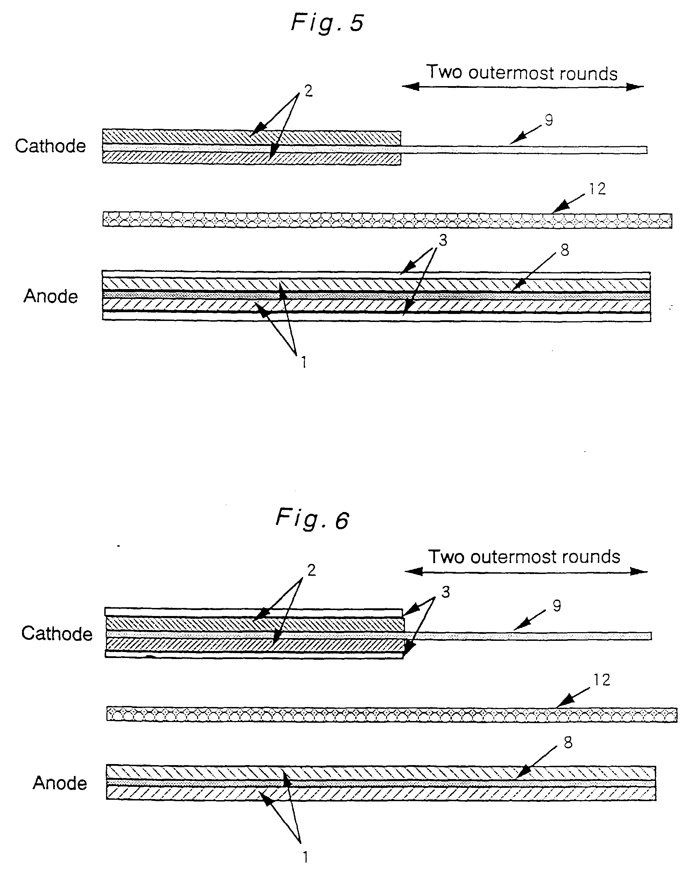

Fig. 5 is a schematic drawing showing the outermost portion of the secondary battery embodying the present invention described in Example 20.

Fig. 6 is a schematic drawing showing the outermost portion of the secondary battery embodying the present invention described in Example 21.

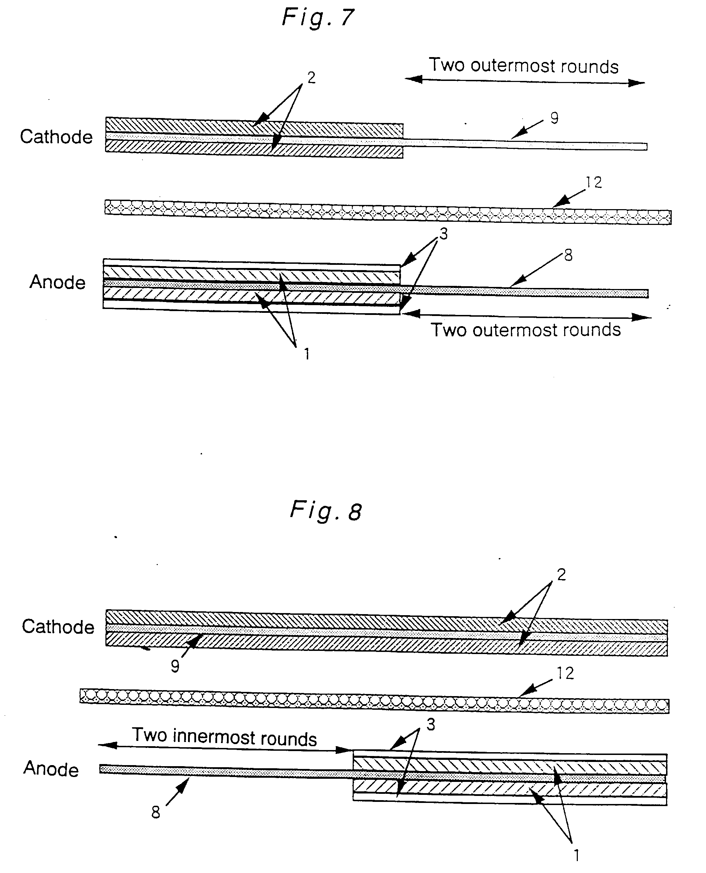

Fig. 7 is a schematic drawing showing the outermost portion of the secondary battery embodying the present invention described in Example 24.

Fig. 8 is a schematic drawing showing the innermost portion of the secondary battery embodying the present invention described in Example 25.

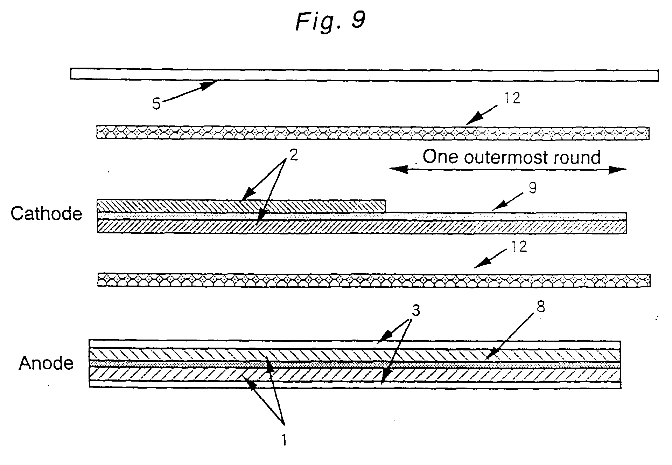

Fig. 9 is a schematic drawing showing the outermost portion of the secondary battery embodying the present invention described in Example 26.

Meanings of symbols

1:    Anode (negative pole)
2 :    Cathode (positive pole)
3 :    Microporous membrane
4 :    Insulator
5 :    Cell can
6 :    Sealing gasket
7 :    Cell cover
8 :    Anode collector
9 :    Cathode collector
10:    Anode lead
11:    Cathode lead
12:    Separator
13:    Conductor equal in potential to the anode
14:    Conductor equal in potential to the cathode

Since, in an electrode in accordance with the present invention, a microporous membrane is integrally provided on the electrode member, which serves as a substrate for the microporous membrane, there is no layer clearance between the microporous membrane and the electrode member and both of them are sufficiently melt bonded to one another to behave integrally when the electrode is processed or used. Therefore, such an electrode has a structure different from that of a conventional electrode in which a separator or polymer electrolyte is simply placed or laminated between electrode members. It can be produced, for example, by directly forming a film on the electrode member.

The microporous membrane used in the present invention may have a strength of 0.1 - 10 MPa, preferably 0.5 - 2 MPa and may have an elastic modulus of 10 - 200 MP, preferably 10 to 100 MPa. If the microporous membrane has too low a strength and elastic modulus, the microporous membrane is likely to be broken such that maintaining electrodes in spaced relation with each other becomes difficult. On the other hand, if the microporous membrane has too high a strength and elastic modulus, the effect of maintaining electric resistance between electrodes cannot be obtained when the battery is penetrated by a nail, and so a shortcircuit occurs to lower the safety of the battery, as described below. That is, although the reason why a battery using a microporous membrane with such mechanical properties is improved in safety is not clear, it can be considered that since the microporous membrane is lower than a separator in mechanical strength, the broken pieces formed by nail penetration remain on the surfaces of the electrodes, so that the contact between the cathode and the anode does not reach a perfect shortcircuit, to leave some resistance, thereby inhibiting bursting and setting on fire. The strength of a microporous membrane embodying the present invention is generally lower than the strength of conventional separators by 2 or 3 orders of magnitude, but since the microporous membrane of the present invention is directly formed on an electrode substrate, it is not required to be especially high in strength.

The mechanical properties of the microporous membrane can be measured at room temperature using conventional measuring instruments. The strength is obtained by dividing the maximum load by the apparent initial sectional area of the specimen. The elastic modulus is obtained by identifying the gradient in a load vs. crosshead moving distance diagram, multiplying the maximum value of the gradient by the grip interval, and dividing the product by the sectional area of the specimen. A specimen of a microporous membrane is obtained by peeling it from the surface of the electrode or by forming a film on a metallic foil and dissolving away the metal, to leave a film.

A microporous membrane embodying the invention which is mainly composed of, for example, a type PVDF is an electric insulator and has ion permeability. Hence, it can also be used as a separator film. When the electrode is used at least as one of the cathode and the anode, a battery can be established even without placing a separator film between the electrodes. This provides such advantages that the conventional expensive separator film is not required to be used, that the conventional complicated production process can be simplified, and that the yield decline due to the conduction (shortcircuit) between the cathode and the anode caused by inaccurate rolling in electrode production can be prevented. Furthermore, because of the film properties of the covering separator, the inter-electrode gap can be decreased, as compared with the case when a conventional separator film is used. Hence, the amount of the electrodes packed into the cell can can be increased (the cell capacity can be improved), and the inter-electrode distance can be shortened. Moreover, since the resistance against ion permeability is small, the capacity drop at the time of high output discharge can be decreased. Furthermore, in the case of a conventional separator, unless the thickness is usually about 25 $\mu$m, a shortcircuit occurs, for example, when the electrodes are rolled, but a separator directly formed on an electrode, as in the present invention, can sufficiently prevent a shortcircuit even if the thickness is about 10 $\mu$m.

Of course, when at least either of the cathode or anode is an electrode of the present invention, a separator film can also be installed between the electrodes. This may be preferable since the yield improves. Furthermore, if the microporous membrane and the separator are used together, the shut-down characteristic can work reliably in a short time advantageously.

It is known that an ion permeable film of PVDF can be used in a battery as a polymer solid electrolyte or a microporous membrane. Thus, the use of a polymer solid electrode is disclosed in US-A-5296318 and WO-A-95/06332. These are concerned with a homogeneous polymer electrolyte, and are characterized in that the polymer film is free from voids or pores to inhibit the generation of dendrite and that a copolymer with hexafluoropropylene is used to lower the crystallinity of the polymer. On the other hand, the use, in a battery, of a microporous membrane of PVDF is disclosed in JP-A-08-250127. In this technique, the microporous membrane is used as a structure for holding a separator film or an active material of an electrode, and for application in the battery, the microporous membrane is simply placed between electrodes. A method in which the surface of an electrode is directly coated with the microporous membrane is not described, and neither are the mechanical properties of the microporous membrane. This document requires a $\beta$ type structure as the crystal structure of the PVDF, to enhance the ion conductivity, and it is stated that for this purpose, drawing or tensioning the film is necessary. On the other hand, we find that if porous $\alpha$ type PVDF conventionally considered to be poor in the effect of improving safety and to be low in ion conductivity is used to cover the surface of an electrode, the safety of the battery is surprisingly improved.

We also find that batteries embodying the present invention are also effective in electrochemical safety tests such as the overcharge test and heating test. That is, we find that even though safety devices such as a pressure burst plate, PTC element and current shut-down valve are usually used in an attempt to avoid problems in battery use such as overcharge and heating, the battery of the present invention can pass the electrochemical safety tests such as overcharge test and heating test even without using such measures. The reason for the effect is not clear, but it is estimated that the shut-down characteristic of the microporous membrane operates to avoid such problems.

The microporous membrane present on an electrode member of an electrode of the present invention can be produced by (1) immersing a polymer film containing a good solvent for the polymer in a poor solvent, for replacing the good solvent by the bad solvent, or (2) heating a polymer film containing a foaming agent, or (3) immersing a polymer film containing a material soluble in a solvent in the solvent, for dissolving out the material.

First of all, a class (1) procedure is described below. A polymer is dissolved in a solvent, to prepare a raw solution. That is, about 1 wt% to 20 wt% of PVDF is dissolved in N-methyl-2-pyrrolidone. Then, an electrode member prepared as a sheet is immersed in said raw solution for a predetermined time, preferably about 1 second to 10 minutes, and is lifted, for example, according to the dip method, etc. If necessary, the extra raw solution deposited on the electrode member is removed. After completion of immersion, the electrode member is immersed in an extracting solvent such as water, methanol, ethanol, acetone or hexane (one or more as a mixed solution) for a predetermined time, preferably 10 seconds to 100 minutes, and lifted, to replace the solvent in the PVDF film directly formed on the electrode member by the extracting solvent, thus making the PVDF film microporous. Thereafter, it is dried, and if necessary, pressed, for example, by the roll press method to obtain an electrode with a microporous film directly formed on an electrode member of the present invention. The above pressing operation may deform the micropores of the film to some extent, but if the press conditions (e.g. pressure and temperature), electro-conductive material, binder and mixing ratio are selected, a film not impaired in separator performance can be obtained. The film density of the microporous membrane of an electrode of the present invention may be about 0.1 to 3.0 $g/cm^3$. This method has an advantage in that the thickness and porosity of the microporous membrane can be relatively easily controlled by properly selecting the manufacturing conditions.

In the method of class (2), one or more foaming agents selected from inorganic foaming agents such as ammonium carbonate, sodium bicarbonate, and an equimolar mixture of sodium nitrite and ammonium chloride, and organic foaming agents, for example, nitroso based foaming agents such as dinitrosopentamethylenetetramine (DPT) and N,N'-dimethyl-N,N'-dinitrosoterepthalamide, sulfonehydrazide based foaming agents such as benzenesulfonyl hydrazide, p-toluenesulfonyl hydrazide and p,p'-oxybis-3,3'-disulfonehydrazide diphenylsulfone, and azo based foaming agents such as azobisisobutyronitrile, azodicarbonamide (AC), barium azodicarboxylate and diethylazo dicarboxylate are added to the raw solution prepared as described in (1), and the mixture is mixed homogeneously. An electrode member prepared as a sheet is immersed in the raw solution containing the foaming agent for several seconds to about 10 minutes, and lifted, for example, according to the dip method. If necessary, the extra raw solution deposited on the electrode member is removed. Thereafter, it is dried at tens of degrees centigrade to 200°C, to be foamed, and if necessary, it is pressed as described in (1), to obtain an electrode of the present invention with a porous separator film formed directly on an electrode member. When DPT or AC (for example), high in foaming temperature is used as a foaming agent, it is effective to use a foaming aid such as salicylic acid, stearic acid, zinc dust or a urea based compound.

In the method of class (3), for example, a fine powder of sodium chloride is incorporated a film, using the same method as that for incorporating the foaming agent in the method of class (2), and the film is immersed in water to dissolve out the sodium chloride, thereby providing a porous film. The thickness of the porous film is preferably 200 μm or less, more preferably 50 μm or less, still more preferably 25 μm or less, to lower the internal resistance of the battery.

As the crystal structures of PVDF, α type, β type, γ type and δ type are known. The microporous PVDF membrane used in the present invention is preferably of α type structure. The crystal structure can be identified by ordinary wide angle X-ray diffraction. The a type structure can be confirmed by the intense (100), (020) and (001) diffraction lines near 18 to 19 degrees observed in X-ray diffraction measurement by CuKα rays.

In the above, a microporous film made of PVDF only is described, but as far as PVDF shows α type, a blend with another polymer, or a mixture with another polymer can also be preferably used.

The porosity of the microporous membrane is preferably larger for improving ionic conductivity, but if it is too large, the electrode surface covering effect declines. Thus, the porosity is preferably 40 to 90 %, more preferably 65 to 90%. The porosity of the microporous membrane present in an electrode embodying the present invention is difficult to measure in the state in which it is formed on the electrode member. Therefore, the microporous membrane formed on a substrate such as a metal foil was measured by the following mercury porosimeter method. That is, a cell containing a sample was evacuated (to about 0.7 Pa), and mercury was injected. The cell was installed in a porosimeter (Model 2000 produced by Carlo Elba), and the porosity was measured in a measuring pressure range of 100 kPa to 190 MPa. The distribution of pores can also be measured by a porosimeter. The median size of pores of a microporous membrane used in the present invention is preferably 40 - 1500 nm. If the median size is smaller than 40 nm, the discharge current capacity ratio of the battery is impaired, and if larger than 1500 nm, the improvement in safety is lessened.

Another important constituent feature which may be present in a battery embodying the present invention is that of a conductor equal in potential to the cathode and a conductor equal in potential to the anode rolled and laminated to face each other and spaced from each other by a separator along a length of at least, preferably more than one turn. Such an assembly is described below.

Usually if a physical impact acts from the outside of a cell can to deform the cell can (e.g. in a nail penetration or crush test), for example, the cathode and the anode are deformed to damage the separator, causing the cathode material and the anode material or the cathode collector and the anode collector to contact each other (electric shortcircuit). In the shortcircuited portion, shortcircuit current is concentrated to generate Joule heat, and with the rise of temperature, the reaction between the anode and/or cathode and the electrolyte and the release of active oxygen by the decomposition of the cathode material in the charged state finally cause bursting and possibly a fire. However, by providing a conductor equal in potential to the cathode and a conductor equal in potential to the anode which are rolled and laminated to face each other, while being separated from each other by a separator for at least one turn, this allows the heat generated at the initial shortcircuit portion to be generated at a place free from any unstable active material in the charged state, to inhibit the decomposition of the cathode material in the charged state, thus inhibiting or preventing the bursting and setting alight of the battery. In this connection, our JP-A-08-085313 already discloses an electrically connected conductor, which conductor can also be integrated with a collector.

If the portion where the conductors face each other exists in the outermost portion of a rolled electrode, radiation to the outside of the cell can is easy, and it is considered to be effective when an initial shortcircuit occurs in the outermost portion as in a nail penetration test. If the portion where the conductors face each other exists in the innermost portion of a rolled electrode, it is considered to be effective when an initial shortcircuit is likely to occur in the innermost portion small in roll radius as in a crush test. Thus, using them together is preferable since a battery effective in both a nail penetration test and a crush test can be produced. Furthermore, the cell can can also be used as a conductor equal in potential to the cathode or anode. Moreover, an outside electrode different from the cell can in polarity may also be provided outside the cell can, to surround the cell can and be spaced from it by means of a separator. This may be excellent in universality and exchangeability because it can be applied to all batteries as a safety device.

The separator existing between the conductor equal in potential to the cathode and the conductor equal in potential to the anode can be a microporous polyethylene membrane usually used for batteries or the covering microporous membrane provided on an electrode of the present invention. Furthermore, using them together is also effective for preventing shortcircuits in ordinary use.

The above constitution is not only effective for momentary energy consumption, but also is considered to ensure higher safety, for example, even when the nail is maintained in position in the rolled electrode in a nail penetration test, since the resistance at the shortcircuit portion between the conductors equal in potential to the cathode and the anode respectively in the outermost portion and/or in the innermost portion is estimated to be least, with the shortcircuit current concentrated at the shortcircuit portion.

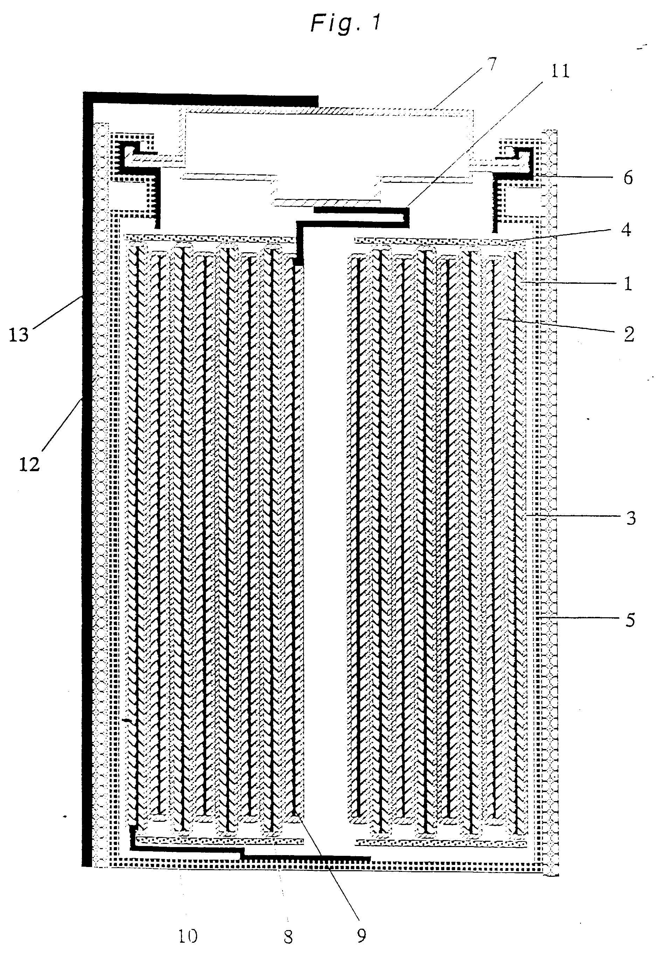

Fig. 1 shows a battery embodying the present invention. Around a cell can 5 equal in potential to the anode, an electrically insulating separator 12 is provided, and around it, a conductor 13 electrically connected with a cell cover 7 equal in potential to the cathode is laminated as an external electrode.

The material of the separator 12 is not especially limited if it can electrically insulate the cell can 5 and the conductor 13, and can be a sheet, coated membrane (for example, the microporous membrane present on an electrode of the present invention) or beads, etc. of a polymer such as polyethylene, polypropylene, polyester, teflon or polyethylene glycol (1000 or more in molecular weight), a laminate of these polymers (e.g., polypropylene/polyethylene/polypropylene), a rubber such as fluorine-containing rubber, silicone or chloroprene rubber, nonwoven fabric, paper or glass.

The thickness of the separator 12 is not especially limited, and can be decided in dependence upon, for example, the size of the battery and the material of the separator.

The separator 12 is not required to cover the entire circumference of the cell can, and can cover only part of the circumference of the cell can as far as it can electrically insulate the conductor 13. Furthermore, it is preferable that when a physical impact acts from outside to deform the cell can (as in a nail penetration test or crush test), the cell can 5 and the conductor 13 contacts each other quickly. It is also desirable that when the cell can is internally heated, whatever the cause, or when the battery is exposed to a high temperature, the separator is rendered molten, causing the cell can 5 and the conductor 13 to contact each other (shortcircuit), allowing release of energy.

The separator 12 can be installed by winding it around the circumference of the cell can or coating the cell can with the separator before or after production of the battery. Furthermore, it can also be stuck or applied to the conductor 13 beforehand. The separator 12 and the conductor 13 can be installed in the innermost portion of the cell can, for example, as described below. Usually, a cathode sheet, separator and anode sheet are rolled into a rolled electrode. When the cathode and the anode are rolled, the cathode collector is rolled at the portion not coated with the cathode material, leaving the portion coated with the cathode material for later rolling, and the portion of the collector only and the separator are rolled for a distance of at least more than one turn. Thereafter, a known method can be used for producing the battery. In this state, if the cell can is penetrated by a nail or otherwise deformed, the cell can contacts the cathode collector at the portion not coated with the cathode material, to form a shortcircuit. Furthermore, if the anode is also similarly rolled in addition to the cathode, conductors contact each other at a lower resistance, to effectively improve the safety. In the case of the innermost portion, on the contrary, the portion not coated with the cathode material of the cathode collector is rolled in the former half, and the portion of the collector only and the separator are rolled for a distance of at least more than one turn. Subsequently, a known method is used for producing the battery. If the anode is also similarly rolled in addition to the cathode, a shortcircuit occurs at a lower resistance to effectively improve the safety, as in the case of providing the portion where the conductors face each other, in the outermost portion. Furthermore, it is self evident that even if the cell can is connected to be equal in potential to the cathode, a similar effect can be obtained if the cathode and the anode are reversed.

Even if an electrode equal in potential to the cell can is laminated beforehand and separated by a separator in the outermost portion and/or innermost portion of the cell can, and outside and/or inside it, an electrode equal in potential to the other electrode is laminated. While being separated from each other by a separator, then there is no problem as far as the object of the present invention can be achieved. Furthermore, even if an anode or cathode material layer is formed on the conductor on the side not facing the other conductor, there is no problem as far as the object of the present invention can be achieved.

The conductor 13 is not especially limited as far as it is conductive, and can be a metallic material or carbonaceous material. Especially metallic materials such as aluminum, copper, nickel, stainless steel and iron are preferable in view of processability and cost. The conductor 13 can be electrically connected to the collector, or the collector can be partially free from any anode or cathode material layer, for use as the conductor 13. Around the conductor 13, a protective film usually used for the battery such as a heat shrinkable film can also be formed without any problem.

The safety mechanism of the present invention is not necessarily required to be provided in the battery itself. A battery pack in which a plurality of batteries are connected in series and/or parallel can be covered entirely or partially with a separator, and a conductor connected to a part reverse in polarity to the cell can can also be laminated, without any problem as far as the safety mechanism works effectively as in the present invention. Various modifications can be made to effect the same safety mechanism as in the present invention.

The carbonaceous material used in the present invention is not especially limited, and in general, a burned organic material or graphite can, for example, be used. As the carbonaceous material, a powdery carbonaceous material or a powdered fibrous carbonaceous material is preferably used. The powdery carbonaceous materials which can be used include natural graphite, artificial graphite, coke such as fluid coke, pitch of coal or petroleum, burned mesocarbon microbeads, burned resins such as polyacrylonitrile (PAN) or its copolymers, cellulose, polyvinyl alcohol, lignin, polyvinyl chloride, polyamides, polyimides, phenol resin and furfuryl alcohol. The fibrous carbonaceous materials which can be used include PAN based carbon fibers obtained from PAN or any of its copolymers, pitch based carbon fibers obtained from the pitch of coal or petroleum, cellulose based carbon fibers obtained from cellulose and vapor phase grown carbon fibers obtained from a low molecular organic material gas. Furthermore, carbon fibers obtained by burning, for example, the above polyvinyl alcohol, lignin, polyvinyl chloride, polyamides, polyimides, phenol resin or furfuryl alcohol can also be used.

Among them, a carbonaceous material satisfying the characteristics of the electrode and battery in which it is to be used can be properly selected. The carbonaceous material used in the anode of a secondary battery using a nonaqueous electrolyte containing an alkali metal salt is preferably a PAN based carbonaceous material, pitch based carbonaceous material or vapor phase grown carbon fiber. Especially in view of good doping of alkali metal ions, particularly lithium ions, a PAN based carbon material is preferably used. The grain size of the powdery carbonaceous material is preferably 0. 1 to 100 $\mu$m, more preferably 1 to 50 $\mu$m. The diameter of the carbon fibers should be decided to allow easy application, but is preferably 1 to 1000 $\mu$m, more preferably 1 to 20 $\mu$m, still more preferably 3 to 15 $\mu$m. It is also preferable to use several kinds of carbon fiber different in diameter. The average length of the carbon fibers is preferably 1 mm or less, more preferably 50 $\mu$m or less, still more preferably 8 to 30 $\mu$m. As the lower limit, the ratio of fiber length to fiber diameter (aspect ratio) is preferably 1 or more. If the average length is more than 1 mm, a slurry is formed, and when the electrode is formed as a sheet, coatability is poor. Furthermore, when an electrode is made by using it, an undesirable shortcircuit between the cathode and the anode is likely to occur. If the aspect ratio is less than 1, the ratio of active carbon faces exposed by cleavage at the time of powdering becomes excessive, and as a result, the cycle characteristic becomes poor. The average length of fibers can be obtained, for example, by measuring the lengths of 20 or more carbon fibers by observation with a microscope such as SEM. To cut or grind carbon fibers to 1 mm or less, various grinders can be used.

Considering the balance between cycle characteristic and capacity performance, a mixture consisting of graphite powder and carbon fibers or a mixture consisting of amorphous carbon powder and carbon fibers may be better as the case may be.

In addition to the carbonaceous material, for example, the oxide of a metal selected from IV-B and/or V-B metalloids (Ge, Sn, Pb, Sb, Bi) of the periodic table, and In, Zn and Mg, or a compound such as polyacene, as disclosed in JP-A-07-235293, can also be used as an anode material.

As the anode of the present invention, a metal such as copper or stainless steel for enhancing the collection effect can be used as a collector. The metallic collector can be, though not limited to, a foil, fibers or meshes and for example, when a foil is used as the metallic collector, the metallic foil can be coated with a slurry to produce an electrode sheet. To the electrode sheet, carbon black such as acetylene black or furnace black is added as a electro-conductive material to further enhance the collection effect. Furthermore, to improve conductivity, a conductive powder such as carbon powder or metallic powder can also be added.

The cathode material used in the electrode of the present invention can be artificial or natural graphite powder, carbon fluoride, or an inorganic compound such as a metal oxide or organic high polymer. In this case, if an inorganic compound such as a metal oxide is used as the cathode, the doping and undoping of cations are used to cause charging and discharging reactions. In the case of an organic high polymer, charging and discharging reactions are caused by the doping and undoping of anions. Thus, depending on the material used, various types of charging and discharging reaction are adopted, and these types of reaction are properly selected to suit the required cathode characteristics of respective batteries. Specifically, cathode materials used in ordinary secondary batteries can be used, which include inorganic compounds such as transition metal oxides and transition metal chalcogens including alkali metals, conjugated high polymers such as polyacetylene, polyparaphenylene, polyphenylenevinylene, polyaniline, polypyrrole and polythiophene and crosslinked high polymers with disulfide bonds. Among them, in the case of a secondary battery using a nonaqueous electrolyte containing a lithium salt, transition metal oxides and transition metal chalcogens of cobalt, manganese, nickel, molybdenum, vanadium, chromium, iron, copper and titanium are preferably used. Especially $Li_xCoO_2$ ($0 < x \leqq 1.0$), $Li_xNiO_2$ ($0 < x \leqq 1.0$), lithium compound oxides with some of these metal elements substituted by alkaline earth metal elements and/or transition metal elements (e.g., JP-A-09-017430), $Li_xMnO_2$ ($0 x \leqq 1.0$), and $Li_xMn_2O_4$ ($0 < x \leqq 1.3$), are preferably used.

As a cathode of the present invention, a metal such as aluminum, nickel, stainless steel or titanium can be used as a collector for enhancing the collection effect, as in the anode. Furthermore, as in the anode, carbon black such as acetylene black may be added. Moreover, to improve conductivity, a conductive powder such as carbon powder or metallic powder can also be added.

The method for producing the cathode or anode is not especially limited. The collector is coated with a paste obtained by kneading a binder, anode or cathode material and electro-conductive material with an organic solvent or water dried and pressed into a sheet. The solvent used for making the paste and the solid content are not especially limited, and can be properly decided, in dependence upon, for example, the resin used, the coating method and the drying conditions. The paste can contain various additives such as a surfactant for improving coatability, defoaming agent, dispersing agent, ultraviolet absorbent, and stabilizer for improving storage stability.

As the electrolyte used in a battery embodying the present invention, conventional electrolytes can be used without any limitation. For example, aqueous acid or alkali solutions and nonaqueous solvents can be used. Among them, for a nonaqueous electrolyte containing any of the above alkali metal salts used for a secondary battery, preferably used are propylene carbonate (PC), ethylene carbonate (EC), γ-butyrolactone (BL), N-methylpyrrolidone (NMP), acetonitrile (AN), N,N-dimethylformamide, dimethyl sulfoxide, tetrahydrofuran (THF), 1,3-dioxolane, methyl formate, sulfolane, oxazolidone, thionyl chloride, 1,2-dimethoxyethane (DME), dimethyl carbonate (DMC), diethylene carbonate (DEC), dimethyl imidazolidinone, their derivatives, and mixtures thereof.

As the electrolyte compound contained in the electrode solution, preferably used are halides of alkali metals, particularly lithium, perchlorates, thiocyanates, borofluorides, phosphofluorides, arsenofluorides, aluminofluorides and trifluoromethyl sulfates.

The present invention can be applied to various batteries, and which of primary and secondary batteries, the present invention can be applied to is not especially limited. However, the present invention is preferably used for a secondary battery, above all, a lithium metal secondary battery as a nonaqueous electrolyte secondary battery, or a lithium ion secondary battery. The form of the battery is not especially limited, and any of square, cylinder, card or coin can be used.

The safety of a battery generally tends to decline with the increase of battery energy, and with a high energy battery, for example, a lithium ion secondary battery with high energy, the safety assuring technique is an important issue, even though it does not use lithium metal as the anode. The present invention can be preferably used as a measure for ensuring the safety of such a high energy battery. Specifically, the present invention can be effectively used as a safety improvement measure of a battery of 265 Wh/1 or more in volumetric energy density and/or 110 Wh/kr or more in gravimetric energy density, more preferably 300 Wh/1 or more in volumetric energy density and/or 125 Wh/kg or more in gravimetric energy density.

The present invention can provide a battery having a high capacity, more particularly a good discharge current capacity ratio, a good lifetime capacity ratio, good cycle characteristics and a high safety.

The secondary battery using the electrode of the present invention can be widely used for such portable small electronic apparatuses as a video camera, personal computer, word processor, radio cassette, portable phone, handy terminal, CD player, MD player, electric shaver, liquid crystal television set and toys, and also for an electric motor vehicle.

Especially preferred embodiments of the present invention are described below with reference to the following Examples.

EXAMPLE 1

(1) Production of cathode member

Marketed lithium carbonate ($Li_2CO_3$) and basic cobalt carbonate ($2CoCO_3 \cdot 3Co(OH)_2$) were weighed to achieve a molar ratio of Li/Co = 1/1, wet-mixed in a ball mill made of zirconia (using ethanol as a grinding solvent), and heat-treated in air at 900°C for 20 hours, to synthesize $LiCoO_2$. It was ground by the ball mill, to obtain $LiCoO_2$ powder as an active cathode material.

Ninety one weight percent of the cathode material, 6 wt% of PVDF (KF polymer #1100 produced by Kureha Chemical Industry Co., Ltd.) and 3 wt% of acetylene black ("Denka Black" produced by Denki Kagaku Kogyo K.K.) were weighed, and the same amount of NMP was added. The mixture was kneaded to make a paste. The paste was applied onto one side of a 16 μm thick aluminum foil, so that the weight of the $LiCoO_2$ per unit area might be 200 g/m², and was dried at 100°C for 15 minutes. The paste was also applied on the other side and dried at 100°C for 30 minutes, and further at 180°C for 15 minutes, to produce an electrode sheet using $LiCoO_2$. The electrode sheet was roller-pressed at a linear pressure of about 100 kg/cm, to be bonded to an aluminum collector. It was slit to obtain a cathode member of 190 μm in total thickness.

(2) Production of anode member

Eighty five weight percent of short carbon fibers ("Torayca" Milled Fibers: MLD-30 produced by Toray Industries, Inc.), 10 wt% of PVDF (stated before) and 5 wt% of acetylene black (stated before) were weighed and about 1.4 times the amount NMP was added. The mixture was kneaded to obtain a paste as an anode material.

The paste was applied to one side of a 10 μm thick copper foil, and dried at 100°C for 15 minutes. The paste was also applied on the other side, but in a lesser amount, so as to provide a lower proportion of the anode material per unit area, and dried at 100°C for 30 minutes and further at 200°C for 15 minutes in nitrogen current, to produce an electrode sheet using short carbon fibers. The electrode sheet was roller-pressed at a linear pressure of about 100 kg/cm, to be bonded to a copper foil collector, and slit, to obtain a 200 μm thick electrode member for a battery.

(3) Production of raw solution for microporous membrane

To PVDF (stated before), NMP was added, and the mixture was stirred to be perfectly dissolved, and defoamed in vacuum, to produce an NMP solution containing 15 wt% of PVDF.

(4) Production of microporous membrane

The cathode member produced in (1) was immersed in the solution produced in (3), lifted according to the dip method, immersed in a methanol solution for 20 minutes, and dried at 60°C for 20 minutes, to produce an electrode. The thickness of the microporous membrane formed on the electrode was observed by a scanning electron microscope (SEM) and found to be 15 μm. Also the anode member produced in (2) was covered with a microporous membrane according to the same method. The thickness of the microporous membrane obtained was 12 μm. The crystal structures of the microporous membranes formed on these electrodes were subjected to X-ray diffraction method by CuKα rays, and as a result, intense diffraction lines attributable to (100), (020) and (001) planes respectively at 17.87°, 18.39° and 19.19° were observed, to identify that the PVDF microporous membranes were of α type structure. Furthermore, a microporous membrane was produced on an aluminum metal foil according to the same method, and the aluminum metal foil was dissolved, to obtain a microporous membrane. Ten sheets of the membrane were overlapped, and tensile-tested using a universal material tester (Model 1185 produced by Instron), and the strength and elastic modulus were obtained according to the crosshead moving distance method. The results are shown in Table 3. Furthermore, according to the mercury penetration method (Mercury Porosimeter 2000 produced by Carlo Elba), the pore median diameter and porosity were measured. The results are also shown in Table 3.

(5) Electrolyte

A solution with 1 mole/liter of $LiPF_6$ dissolved in a mixture consisting of equal volumes of PC and DMC was produced.

(6) Production of battery

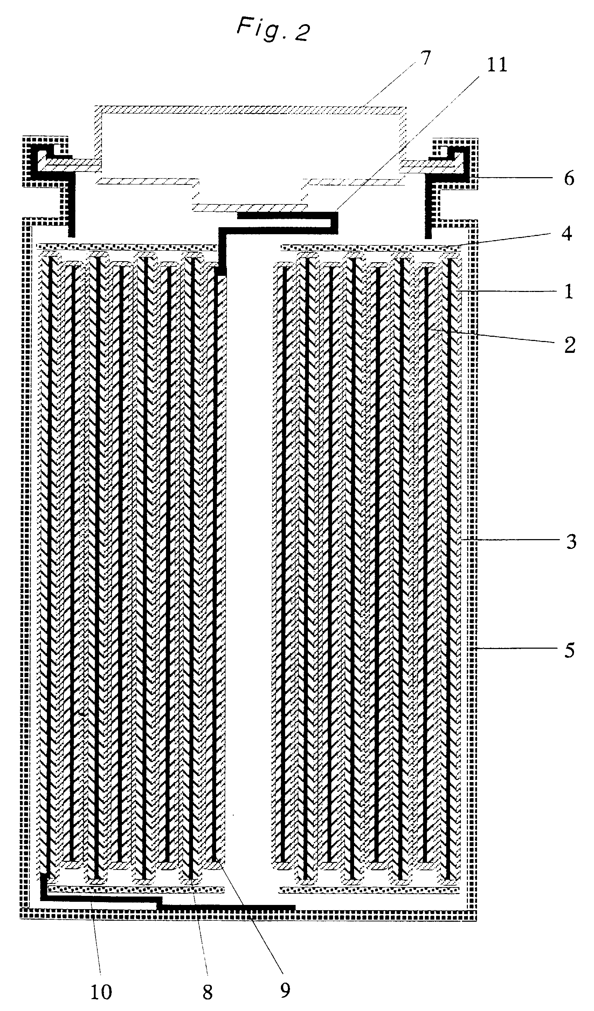

A schematic vertical sectional view of a nonaqueous electrolyte secondary battery of the present invention is shown in Fig. 2. In the cell can 5, the cathode 1 and the anode 2 respectively top-coated with a microporous membrane obtained in (4) above are rolled, and insulators 4 are installed at the top and bottom.

To the cell can 5, a cell cover 7 is installed by caulking through a sealing gasket, and they are respectively electrically connected with the anode 1 and the cathode 2 through an anodic lead 10 and a cathodic lead 11.

Such a nonaqueous electrolyte secondary battery was produced as described below. To the collector portions 8 and 9 respectively of the anode 1 and the cathode 2, the anodic lead 10 made of nickel and the cathodic lead 11 made of aluminum were welded. As the collector portions of the anode 1 and the cathode 2, conventional separators were used partially, and while the anode 1 and the cathode 2 were laminated, they were spirally rolled, to obtain a spirally rolled electrode. As a method for preventing the electric shortcircuit between the collector of the cathode 2 and the anode 1, a room temperature setting epoxy resin (electric insulator) can be applied uniformly and hardened, or the microporous membrane may be applied as a top coating. Apart from the above coating with an electric insulating resin, for example, an electrically insulating tape can be stuck or any other method can be used for achieving the purpose of preventing the electric shortcircuit between the cathode and the anode.

After insulating plates 4 were arranged at both the top and bottom ends of the spirally rolled electrode prepared as above, the assembly was inserted into the cell can 5, and the cathodic lead 11 was welded to the cell cover while the anodic lead 10 was welded to the cell can 5. Into the cell can 5, the electrolyte was injected in a globe box of argon atmosphere. The cell can 5 was caulked through the insulating sealing gasket 6 coated on the surface with asphalt, to fix the cell cover 7 and to keep the cell internally gas-tight. In this way, eleven cylindrical nonaqueous secondary cells of 18650 in size were assembled.

Of these cells, one cell was charged at a constant current and at a constant voltage at a charge end voltage of 4.2 V and a charge current of 1 A, and discharged at a constant current at a discharge end voltage of 2.75 V and a discharge current of 0.2 A, to obtain the initial capacity. Then, similar charging was executed, and subsequently, constant current discharging in high rate output conditions of 3.0 V in discharge end voltage and 2.0 A in discharge current, and this charging and discharging cycle was repeated 300 times. The discharge capacity at the 300th cycle was compared with the discharge capacity at the first cycle, to obtain the life capacity ratio expressed by the following formula:

Life capacity ratio (%) =

{(Discharge capacity at the 300th cycle)/(Discharge

capacity at the 1st cycle)} x 100

The results of evaluating the gravimetric energy density, volumetric energy density, life capacity ratio and the discharge current capacity ratio, expressed by the following formula are shown in Table 1.

Discharge current capacity ratio (%) =

{(Capacity at 2.0 A discharge)/(Cell capacity at 0.2 A discharge)}

Of the remaining 10 cells, 6 cells were charged at a constant current and a constant voltage for 3 hours at a discharge end voltage of 4.2 V and at a charge current of 1 A, and respective 3 cells each were tested as to safety (crush test and nail penetration test) according to the UL standard. The results are also shown in Table 1.

For the remaining 4 cells, an overcharge test and a heating test were carried out (2 cells each). The overcharge test and the heating test were conducted according to the "Guidelines on the Safety Evaluation of Lithium Ion Secondary Batteries" issued by Standardization Committee of Japan Storage Battery Association. The results are shown in Table 2.

EXAMPLE 2

The same method as described in Example 1 was carried out, except that the cathode was not directly covered with the microporous membrane. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 3

The same method as described in Example 1 was carried out, except that the anode was not directly covered with the microporous membrane. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 4

The same method as described in Example 1 was carried out, except that polyacrylonitrile (PAN) was used as the raw material of the microporous membrane. The evaluation results of charge and discharge characteristics and safety tests of this battery are shown in Table 1. The evaluation results of overcharge test and heating test are shown in Table 2. For the microporous membrane, as described in Example 1, the mechanical properties, pore median size and porosity were measured, and the results are shown in Table 3.

EXAMPLE 5

The same method as described in Example 1 was carried out, except that a polyimide (PI) was used as the raw material of the microporous membrane. The evaluation results of charge and discharge characteristics and safety tests of this battery are shown in Table 1. The evaluation results of overcharge test and heating test are shown in Table 2. For the microporous membrane, as described in Example 1, the mechanical properties, pore median size and porosity were measured, and the results are shown in Table 3.

EXAMPLE 6

The same method as described in Example 1 was carried out, except that aramid (AM) was used as the raw material of the microporous membrane. The evaluation results of charge and discharge characteristics and safety tests of this battery are shown in Table 1. The evaluation results of overcharge test and heating test are shown in Table 2. For the microporous membrane, as described in Example 1, the mechanical properties, pore median size and porosity were measured, and the results are shown in Table 3.

EXAMPLE 7

The same method as described in Example 1 was carried out, except that polymethyl acrylate (PAM) was used as the raw material of the microporous membrane. The evaluation results of charge and discharge characteristics and safety tests of this battery are shown in Table 1. The evaluation results of overcharge test and heating test are shown in Table 2. For the microporous membrane, as described in Example 1, the mechanical properties, pore median size and porosity were measured, and the results are shown in Table 3.

EXAMPLE 8

The same method as described in Example 1 was carried out, except that polysulfone (PSF) was used as the raw material of the microporous membrane. The evaluation results of charge and discharge characteristics and safety tests of this battery are shown in Table 1. The evaluation results of overcharge test and heating test are shown in Table 2. For the microporous membrane, as described in Example 1, the mechanical properties, pore median size and porosity were measured, and the results are shown in Table 3.

EXAMPLE 9

The same method as described in Example 1 was carried out, except that 50% of PVDF was replaced by zinc stearate (St-Zn: special grade reagent: produced by Wako Junyaku Kogyo K.K.). The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 10

The same method as described in Example 1 was carried out, except that 50% of PVDF was substituted by manganese stearate (St-Mn: reagent: produced by Wako Junyaku Kogyo K.K.). The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 11

The same method as described in Example 1 was carried out, except that 25 % of PVDF was substituted by St-Zn (stated above) and that 25 % was substituted by St-Mn (stated above). The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 12

The same method as described in Example 1 was carried out, except that 10% of PVDF was substituted by hexabromobenzene (HBB: reagent: produced by Wako Junyaku Kogyo K.K.). The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 13

The same method as described in Example 1 was carried out, except that 10% of PVDF was substituted by hindered amine (HA: Adekastab LA-82: produced by Asahi Denka Kogyo K.K.). The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 14

The same method as described in Example 1 was carried out, except that the method of coating the electrodes with the microporous membrane solution was changed from the dip method to the knife coater method. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 15

The same method as described in Example 1 was carried out, except that the following material was used as an active cathode material. Lithium hydroxide (Li(OH)), nickel hydroxide (Ni(OH)$_2$), strontium hydroxide•octahydrate (Sr(OH)$_2$•8H$_2$O) and cobalt hydroxide (Co(OH)$_2$) were weighed to be Li$_{0.98}$Sr$_{0.002}$Ni$_{0.90}$Co$_{0.10}$O$_2$ as oxides, and the mixture was kept at 650°C for 16 hours for preliminary burning. It was cooled to room temperature, and ground again by an automatic mortar for 30 minutes, and the cohesion of secondary grains was crushed. It was kept at 750°C for 8 hours in the same atmosphere as that of preliminary burning, to be regularly burned, and cooled to room temperature. It was again ground by an automatic mortar, to obtain an active cathode material as a powder. The evaluation results of charge and discharge characteristics and safety tests of the battery in conformity with the present invention using this cathode material are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 16

The same method as described in Example 1 was carried out, except that MLD-30 was heat-treated in nitrogen atmosphere at 1150°C for 4 hours. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 17

The same method as described in Example 15 was carried out, except that the anode used in Example 16 was used. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 18

The same method as described in Example 15 was carried out, except that at the end of the cathode sheet at the radially outermost portion, a portion not coated with any anode or cathode material layer on either side was provided by two outermost rounds in the rolled electrode, to provide a conductor (aluminum foil of the collector) equal in potential to the cathode by two outermost rounds in the rolled electrode without changing the length of the coated portion of the electrode. The electric insulation of the conductor equal in potential to the cathode from the anode and the cell can was secured by partially using a polyethylene separator. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 19

The same method as described in Example 18 was carried out, except that microporous membranes were formed on the cathode and the anode, and that the separator was used between the cathode and the anode. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 20

The same method as described in Example 19 was carried out, except that a microporous membrane was formed on the anode only. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 21

The same method as described in Example 19 was carried out, except that a microporous membrane was formed on the cathode only. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 22

The same method as described in Example 20 was carried out, except that 75 wt% of the active anode material was graphite powder (KS-25 produced by Ronza K.K.), that 25 wt% was the heat treated carbon fibers used in Example 16, and that an electrolyte obtained by dissolving $LiPF_6$ in a mixed solvent consisting of equal volumes of PC, EC and DMC at a rate 1 mole/liter was used. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 23

The same method as described in Example 22 was carried out, except that graphite powder (KS-25 produced by Ronza K.K.) only was used as the active anode material. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 24

The same method as described in Example 22 was carried out, except that at the end of the anode sheet at the outermost portion, a portion not coated with any anode or cathode material on either side was provided by one outermost round of the rolled electrode, to provide also a conductor (the copper foil of the collector) equal in potential to the anode as the one outermost round of the rolled electrode without changing the length of the coated portion of the electrode. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 25

The same method as described in Example 22 was carried out, except that also at the end of the cathode sheet at the innermost portion, a portion not coated with any anode or cathode material layer on either side was provided by two innermost rounds of the rolled electrode, to provide a conductor (the aluminum foil of the collector) equal in potential to the cathode as respectively two outermost and innermost rounds of the rolled electrode without changing the length of the coated portion of the electrode. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

EXAMPLE 26

The same method as described in Example 22 was carried out, except that at the end of the cathode sheet at the outermost portion, a portion not coated with any anode or cathode material layer on one side facing the cell can was provided by one outermost round of the rolled electrode, to provide a conductor (the aluminum foil of the collector) equal in potential to the cathode as one outermost round of the rolled electrode. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

COMPARATIVE EXAMPLE 1

The same method as described in Example 24 was carried out, except that no microporous membrane was formed on the anode, and that the conductor equal in potential to the anode and the conductor equal in potential to the cathode were not provided. The evaluation results of charge and discharge characteristics and safety tests of this battery are shown in Table 1. The evaluation results of overcharge test and heating test are shown in Table 2. For the separator, as described in Example 1, the mechanical properties, pore median size and porosity were measured, and the results are shown in Table 3.

COMPARATIVE EXAMPLE 2

The same method as described in Comparative Example 1 was carried out, except that the cathode and the anode were shortened in length, to keep the cell capacity lower. The evaluation results of charge and discharge characteristics and safety tests of this battery are shown in Table 1. The evaluation results of overcharge test and heating test are shown in Table 2. For the separator, as described in Example 1, the mechanical properties, pore median size and porosity were measured, and the results are shown in Table 3.

COMPARATIVE EXAMPLE 3

An aluminum foil was coated with an NMP solution containing 15 wt% of PVDF, and immersed in methanol, to form a microporous membrane on the aluminum foil, and furthermore immersed in diluted hydrochloric acid for 1 minute, to separate the independent microporous PVDF membrane from the aluminum foil. The independent microporous membrane was rolled together with a polyethylene separator, the cathode and the anode, to produce a rolled electrode. The other operation was as described in Example 24. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

COMPARATIVE EXAMPLE 4

The same method as described in Example 24 was carried out, except that the anode coated with an NMP solution containing 15 wt% of PVDF was immersed in a solution consisting of equal volumes of methanol and NMP, instead of being immersed in methanol. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

COMPARATIVE EXAMPLE 5

The same method as described in Comparative Example 1 was carried out, except that the anode was coated with an NMP solution containing 8 wt% of PVDF, and that the microporous membrane was applied as a top coating. The evaluation results of charge and discharge characteristics and safety tests of this battery are shown in Table 1. The evaluation results of overcharge test and heating test are shown in Table 2. For the microporous membrane, as described in Example 1, the crystal structure, mechanical properties, pore median size and porosity were measured, and the results are shown in Table 3.

TABLE 1

|  | Gravimetric energy density [Wh/kg] | Volumetric energy density [Wh/l] | Discharge current capacity ratio [%] | Life capacity ratio [%] | Safety tests Nail Penetration vs. Crush (Number of bursts/Testing times) |
|---|---|---|---|---|---|
| Example 1 | 122 | 296 | 89 | 92 | 0/3 : 0/3 |
| Example 2 | 122 | 295 | 90 | 93 | 0/3 : 0/3 |
| Example 3 | 122 | 295 | 91 | 93 | 0/3 : 0/3 |
| Example 4 | 122 | 295 | 89 | 92 | 0/3 : 0/3 |
| Example 5 | 121 | 293 | 90 | 92 | 0/3 : 0/3 |
| Example 6 | 121 | 293 | 89 | 92 | 0/3 : 0/3 |
| Example 7 | 121 | 293 | 90 | 92 | 0/3 : 0/3 |
| Example 8 | 120 | 291 | 89 | 92 | 0/3 : 0/3 |
| Example 9 | 121 | 293 | 89 | 92 | 0/3 : 0/3 |
| Example 10 | 121 | 293 | 90 | 92 | 0/3 : 0/3 |
| Example 11 | 121 | 293 | 90 | 92 | 0/3 : 0/3 |
| Example 12 | 121 | 293 | 90 | 92 | 0/3 : 0/3 |
| Example 13 | 121 | 293 | 90 | 92 | 0/3 : 0/3 |
| Example 14 | 121 | 293 | 90 | 92 | 0/3 : 0/3 |

TABLE 1 (continued)

| | Gravimetric energy density [Wh/kg] | Volumetric energy density [Wh/l] | Discharge current capacity ratio [%] | Life capacity ratio [%] | Safety tests Nail Penetration vs. Crush (Number of bursts/Testing times) |
|---|---|---|---|---|---|
| Example 15 | 140 | 329 | 90 | 91 | 0/3 : 0/3 |
| Example 16 | 128 | 309 | 92 | 93 | 0/3 : 0/3 |
| Example 17 | 144 | 349 | 87 | 92 | 0/3 : 0/3 |
| Example 18 | 143 | 346 | 87 | 92 | 0/3 : 0/3 |
| Example 19 | 144 | 349 | 88 | 92 | 0/3 : 0/3 |
| Example 20 | 144 | 349 | 88 | 92 | 0/3 : 0/3 |
| Example 21 | 144 | 349 | 88 | 92 | 0/3 : 0/3 |
| Example 22 | 149 | 361 | 90 | 93 | 0/3 : 0/3 |
| Example 23 | 153 | 370 | 91 | 91 | 0/3 : 0/3 |
| Example 24 | 149 | 361 | 90 | 93 | 0/3 : 0/3 |
| Example 25 | 149 | 361 | 90 | 93 | 0/3 : 0/3 |
| Example 26 | 149 | 361 | 90 | 93 | 0/3 : 0/3 |
| Comparative example 1 | 149 | 361 | 90 | 93 | 3/3 : 3/3 |
| Comparative example 2 | 102 | 243 | 90 | 93 | 1/3 : 0/3 |
| Comparative example 3 | 149 | 361 | 90 | 93 | 2/3 : 1/3 |
| Comparative example 4 | 80 | 194 | 25 | 60 | 0/3 : 0/3 |
| Comparative example 5 | 149 | 361 | 90 | 93 | 3/3 : 2/3 |

TABLE 2

| | Overcharge test | Heating test |
|---|---|---|
| Example 1 | 0/2 | 0/2 |
| Example 2 | 0/2 | 0/2 |
| Example 3 | 0/2 | 0/2 |
| Example 4 | 0/2 | 0/2 |
| Example 5 | 0/2 | 0/2 |
| Example 6 | 0/2 | 0/2 |
| Example 7 | 0/2 | 0/2 |
| Example 8 | 0/2 | 0/2 |
| Example 9 | 0/2 | 0/2 |
| Example 10 | 0/2 | 0/2 |
| Example 11 | 0/2 | 0/2 |

TABLE 2 (continued)

|  | Overcharge test | Heating test |
|---|---|---|
| Example 12 | 0/2 | 0/2 |
| Example 13 | 0/2 | 0/2 |
| Example 14 | 0/2 | 0/2 |
| Example 15 | 0/2 | 0/2 |
| Example 16 | 0/2 | 0/2 |
| Example 17 | 0/2 | 0/2 |
| Example 18 | 0/2 | 0/2 |
| Example 19 | 0/2 | 0/2 |
| Example 20 | 0/2 | 0/2 |
| Example 21 | 0/2 | 0/2 |
| Example 22 | 0/2 | 0/2 |
| Example 23 | 0/2 | 0/2 |
| Example 24 | 0/2 | 0/2 |
| Example 25 | 0/2 | 0/2 |
| Example 26 | 0/2 | 0/2 |
| Comparative example 1 | 2/2 | 2/2 |
| Comparative example 2 | 0/2 | 0/2 |
| Comparative example 3 | 0/2 | 0/2 |
| Comparative example 4 | 0/2 | 0/2 |
| Comparative example 5 | 2/2 | 1/2 |

TABLE 3

|  | PVDF crystal structure | Strength [MPa] | Elastic modulus [MPa] | Pore median size [nm] | Porosity [%] |
|---|---|---|---|---|---|
| Example 1 | α | 0.9 | 46 | 890 | 83 |
| Example 2 | α | 0.9 | 46 | 890 | 83 |
| Example 3 | α | 0.9 | 46 | 890 | 83 |
| Example 4 | - | 0.9 | 47 | 850 | 83 |
| Example 5 | - | 1.2 | 52 | 650 | 82 |
| Example 6 | - | 1.0 | 48 | 700 | 83 |
| Example 7 | - | 1.0 | 47 | 680 | 82 |
| Example 8 | - | 1.1 | 49 | 410 | 83 |
| Example 9 | α | 0.7 | 40 | 780 | 82 |
| Example 10 | α | 0.7 | 40 | 780 | 84 |
| Example 11 | α | 0.7 | 40 | 750 | 82 |
| Example 12 | α | 0.8 | 43 | 780 | 82 |
| Example 13 | α | 0.8 | 44 | 760 | 83 |
| Example 14 | α | 0.9 | 46 | 890 | 83 |

TABLE 3 (continued)

| | PVDF crystal structure | Strength [MPa] | Elastic modulus [MPa] | Pore median size [nm] | Porosity [%] |
|---|---|---|---|---|---|
| Example 15 | α | 0.9 | 46 | 890 | 83 |
| Example 16 | α | 0.9 | 46 | 890 | 83 |
| Example 17 | α | 0.9 | 46 | 890 | 83 |
| Example 18 | α | 0.9 | 46 | 890 | 83 |
| Example 19 | α | 0.9 | 46 | 890 | 83 |
| Example 20 | α | 0.9 | 46 | 890 | 83 |
| Example 21 | α | 0.9 | 46 | 890 | 83 |
| Example 22 | α | 0.9 | 46 | 890 | 83 |
| Example 23 | α | 0.9 | 46 | 890 | 83 |
| Example 24 | α | 0.9 | 46 | 890 | 83 |
| Example 25 | α | 0.9 | 46 | 890 | 83 |
| Example 26 | α | 0.9 | 46 | 890 | 83 |
| Comparative example 1 | - | 190 | 180 | 120 | 45 |
| Comparative example 2 | - | 190 | 180 | 120 | 45 |
| Comparative example 3 | α/- | 0.9/190 | 46/1800 | 890/120 | 83/45 |
| Comparative example 4 | α | 1.3 | 50 | 30 | 25 |
| Comparative example 5 | α | 0.2 | 18 | 1600 | 92 |

TABLE 4

| | Cathode | Anode | Microporous membrane | | Other |
|---|---|---|---|---|---|
| | | | Cathode | Anode | |
| Example 1 | Co based | MLD30 | PVDF | PVDF | |
| Example 2 | Co based | MLD30 | Nil | PVDF | |
| Example 3 | Co based | MLD30 | PVDF | Nil | |
| Example 4 | Co based | MLD30 | PAN | PAN | |
| Example 5 | Co based | MLD30 | PI | PI | |
| Example 6 | Co based | MLD30 | AM | AM | |
| Example 7 | Co based | MLD30 | PAM | PAM | |
| Example 8 | Co based | MLD30 | PSF | PSF | |
| Example 9 | Co based | MLD30 | PVDF | PVDF | Microporous membrane/ St-Zn |
| Example 10 | Co based | MLD30 | PVDF | PVDF | Microporous membrane/ St-Mn |
| Example 11 | Co based | MLD30 | PVDF | PVDF | Microporous membrane/ St-Zn, Mn |
| Example 12 | Co based | MLD30 | PVDF | PVDF | Microporous membrane/ HBB |

18

TABLE 4 (continued)

| | Cathode | Anode | Microporous membrane | | Other |
|---|---|---|---|---|---|
| | | | Cathode | Anode | |
| Example 13 | Co based | MLD30 | PVDF | PVDF | Microporous membrane/ HA |
| Example 14 | Co based | MLD30 | PVDF | PVDF | Knife coater |
| Example 15 | Ni based | MLD30 | PVDF | PVDF | |
| Example 16 | Co based | MLD30(PB) | PVDF | PVDF | |
| Example 17 | Ni based | MLD30(PB) | PVDF | PVDF | |
| Example 18 | Ni based | MLD30(PB) | PVDF | PVDF | Outer aluminum |
| Example 19 | Ni based | MLD30(PB) | PVDF | PVDF | Outer aluminum + separator |
| Example 20 | Ni based | MLD30(PB) | Nil | PVDF | Outer aluminum + separator |
| Example 21 | Ni based | MLD30(PB) | PVDF | Nil | Outer aluminum + separator |
| Example 21 | Ni based | MLD30(PB) | PVDF | Nil | Outer aluminum + separator |
| Example 22 | Ni based | MLD30(PB) KS-25 | Nil | PVDF | Outer aluminum + separator |
| Example 23 | Ni based | KS-25 | Nil | PVDF | Outer aluminum + separator |
| Example 24 | Ni based | MLD30(PB)/KS-25 | Nil | PVDF | Outer aluminum and copper + separator |
| Example 25 | Ni based | MLD30(PB)/KS-25 | Nil | PVDF | Outer and inner aluminum + separator |
| Example 26 | Ni based | MLD30(PB)/KS-25 | Nil | PVDF | One-side outer aluminum + separator |
| Comparative example 1 | Ni based | MLD30(PB)/KS-25 | Nil | Nil | Separator |
| Comparative example 2 | Ni based | MLD30(PB)/KS-25 | Nil | Nil | Separator |
| Comparative example 3 | Ni based | MLD30(PB)/KS-25 | Nil | Nil | Outer aluminum and copper + separator |
| Comparative example 4 | Ni based | MLD30(PB)/KS-25 | Nil | PVDF | Outer aluminum and copper + separator |
| Comparative example 5 | Ni based | MLD30(PB)/KS-25 | Nil | PVDF | Separator |

Co based: $LiCoO_2$
Ni based: $Li_{0.98}Sr_{0.002}Ni_{0.90}Co_{0.10}O_2$
PB: Heat treatment
Outer aluminum: Aluminum foil rolled at the outermost portion
Inner aluminum: Aluminum foil rolled at the innermost portion
Outer copper: Copper foil rolled at the outermost portion
One-side outer aluminum: Aluminum foil rolled on one side at the outermost portion

## Claims

1. An electrode for a battery, which electrode comprises an electrode member and an electrically insulating microporous membrane disposed on and integral with the electrode member.

2. An electrode according to claim 1, wherein the microporous membrane is at least mainly composed of a thermoplastic resin.

3. An electrode according to claim 2, wherein the thermoplastic resin contains a fluorine-containing polymer and/or a sulfur-containing polymer.

4. An electrode according to claim 3, wherein the thermoplastic resin contains 40 wt% or more of $\alpha$ type polyvinylidene fluoride.

5. An electrode according to claim 4, wherein the thermoplastic resin contains 80 wt% or more of $\alpha$ type polyvinylidene fluoride.

6. An electrode according to any preceding claim, wherein the microporous membrane is a wet coagulated coated membrane.

7. An electrode according to any one of claims 1 to 5, wherein the microporous membrane is a membrane coagulated on the electrode member.

8. An electrode according to any preceding claim, wherein the microporous membrane has a strength of 0.1 - 10 MPa.

9. An electrode according to claim 8, wherein the microporous membrane has a strength of 0.5 - 2 MPa.

10. An electrode according to any preceding claim, wherein the microporous membrane has an elastic modulus of 10 - 200 MPa.

11. An electrode according to claim 10, wherein the microporous membrane has an elastic modulus of 10 - 100 MPa.

12. An electrode according to any preceding claim, wherein the median size of pores of the microporous membrane is 40 - 1500 nm.

13. An electrode according to any preceding claim, wherein the porosity of the microporous membrane is 40 to 90%.

14. An electrode according to claim 13, wherein the porosity of the microporous membrane is 65 to 90%.

15. An electrode according to any preceding claim, wherein the microporous membrane contains at least one material selected from a heat absorbent, flame retarder and antioxidant.

16. An electrode according to claim 15, wherein the microporous membrane contains, as a heat absorbent, an organic compound containing zinc and/or manganese.

17. An electrode according to claim 15 or claim 16, wherein the microporous membrane contains, as a flame retarder, an organic compound containing bromine.

18. An electrode according to any one of claims 15 to 17, wherein the microporous membrane contains, as an antioxidant, a hindered amine based organic compound.

19. An electrode according to any preceding claim, wherein the material of the electrode member comprises anode or cathode material and electro-conductive material.

20. An electrode according to claim 19, wherein the anode or cathode material is a lithium compound oxide.

21. An electrode according to claim 20, wherein the lithium compound oxide is $Li_xCoO_2$ ($0 < x \leq 1.0$), $Li_x NiO_2$ ($0 < x \leq 1.0$), or either of these with their metal elements partially substituted by alkaline earth metal, and/or transition metal, elements.

22. An electrode according to claim 19, wherein the anode or cathode material is a carbonaceous material.

23. An electrode according to claim 22, wherein the carbonaceous material consists of carbon fibers and/or graphite powder.

**24.** An electrode according to claim 23, wherein the carbon fibers are short fibers of 30 $\mu$m or less in average length.

**25.** A battery containing an electrode according to any preceding claim.

**26.** A battery according to claim 25, wherein a separator is provided between the electrode and another electrode.

**27.** A battery according to claim 25 or claim 26, wherein a conductor equal in potential to the cathode and a conductor equal in potential to the anode are rolled for at least one turn and laminated to face each other, while being separated from each other by a separator.

**28.** A battery according to claim 27, wherein the conductors facing each other are provided at a radially outermost portion and/or a radially innermost portion of a rolled electrode.

**29.** A battery according to claim 27 or 28, wherein the separator is a microporous membrane at least mainly composed of a thermoplastic resin.

**30.** A battery according to any one of claims 25 to 29, wherein the battery is a secondary battery.

**31.** A battery according to claim 30, wherein a nonaqueous electrolyte is used.

**32.** A battery according to claim 31, wherein the nonaqueous electrolyte contains an alkali metal salt.

**33.** A battery according to claim 32, wherein the alkali metal salt is a lithium salt.

**34.** A battery according to any one of claims 25 to 33, having a volumetric energy density of at least 265 Wh/l.

**35.** A battery according to claim 34, wherein the volumetric energy density is at least 300 Wh/l.

**36.** A battery according to any one of claims 25 to 35, having a gravimetric energy density of at least 110 Wh/kg.

**37.** A battery according to claim 36 having a gravimetric energy density of at least 125 Wh/kg.

*Fig. 1*

## Fig. 2

## Fig. 3

## Fig. 4

## Fig. 5

Two outermost rounds

Cathode

2

9

12

Anode

3

8

1

## Fig. 6

Two outermost rounds

Cathode

2

3

9

12

Anode

8

1

## Fig. 7

Two outermost rounds

Cathode

2

9

12

Anode

3

8

1

Two outermost rounds

## Fig. 8

2

Cathode

9

12

Two innermost rounds

3

Anode

8

1

## Fig. 9

5

12

2

One outermost round

Cathode

9

12

3

8

Anode

1

### European Patent Office

## EUROPEAN SEARCH REPORT

**Application Number**

EP 97 30 7565

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 96 20504 A (ACCUMULATEURS FIXES ;ANDRIEU XAVIER (FR); JOSSET LAURENCE (FR))<br>* the whole document * | 1-7 | H01M2/16 |
| X | EP 0 730 316 A (ATOCHEM NORTH AMERICA ELF)<br>* claims 1-28 * | 1-5 | |
| X | GB 2 101 160 A (DIAMOND SHAMROCK CORP)<br>* claims 1-18 * | 1 | |
| X | WO 82 03802 A (DIAMOND SHAMROCK CORP)<br>* claims 1-7 * | 1 | |
| A | PATENT ABSTRACTS OF JAPAN<br>vol. 096, no. 010, 31 October 1996<br>& JP 08 153542 A (ASAHI CHEM IND CO LTD),<br>11 June 1996.<br>* abstract * | 27-33 | |
| X | DATABASE WPI<br>Section Ch, Week 7819<br>Derwent Publications Ltd., London, GB;<br>Class A14, AN 78-33927A<br>XP002052114<br>& JP 53 032 342 A (JAPAN STORAGE BATTERY CO LTD) , 27 March 1978<br>* abstract * | 1 | TECHNICAL FIELDS SEARCHED (Int.Cl.6)<br><br>H01M |

The present search report has been drawn up for all claims

| Place of search | Date of completion of the search | Examiner |
|---|---|---|
| THE HAGUE | 14 January 1998 | Battistig, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)